# DEMANDE DE BREVET EUROPEEN

(11) **EP 4 474 214 A1**
(43) Date de publication de la demande: **11.12.2024**
(21) Numéro de dépôt: 24305904.5
(22) Date de dépôt: 07.06.2024
(51) Int. Cl.: B60P 3/36, E06C 1/00

(54) **VEHICULE DE LOISIRS COMPORTANT UN AMENAGEMENT D'UNE ZONE INTERIEURE HABITABLE EQUIPE D'UN ESCALIER MOBILE ET RABATTABLE**

(30) Priorité: 08.06.2023 FR 2305769
(71) Demandeur: Trigano VDL, 75019 Paris (FR)
(72) Inventeur: PRAT, Isabelle, 24530 Champagnac de Belair (FR)
(74) Mandataire: Novagraaf Technologies

(57) **Abrégé**

La présente invention a pour objet un aménagement d'une zone habitable qui comporte une partie basse et un espace de couchage qui est délimité par un bord transversal avant de seuil (24) et qui est équipé d'un escalier (40) mobile à plusieurs marches (46) qui est mobile pour occuper une position avant d'utilisation de l'escalier pour accéder à la partie haute, ou une position arrière rangée de l'escalier (40) mobile.

L'escalier (40) mobile est un escalier (40) pliable et rabattable dans un plan vertical.

## Description

### Domaine technique de l'invention

L'invention concerne un véhicule de loisirs comportant un aménagement intérieur tel que par exemple un camping-car ou une caravane.

L'invention concerne plus particulièrement un véhicule de loisirs comportant un escalier intérieur d'accès à une partie intérieure haute dans laquelle est par exemple aménagée une zone de couchage.

### Arrière-plan technique

Pour accéder à une partie haute de couchage comportant un lit aménagé en mezzanine, dans un logement ou dans un véhicule de loisirs, il est connu d'utiliser une échelle, fixe ou amovible rapportée qui peut être rangée dans toute zone prévue à cet effet.

Pour accéder à la partie haute, l'échelle est déployée dans la zone intérieure habitable et elle est mise en appui à son extrémité inférieure, par exemple sur un plancher intérieur et en partie haute sur un bord transversal avant de seuil donnant accès au lit.

Dans son état déployé d'utilisation, l'échelle est généralement inclinée par rapport à la verticale, et son extrémité supérieure doit être accrochée sur une barre correspondante agencée à cet effet au niveau du bord de seuil, ou être mise en appui sur une telle barre ou le bord de seuil.

L'échelle peut être en une seule pièce ou bien en plusieurs tronçons coulissants, ou repliables, pour en réduire l'encombrement dans son état rangé.

L'invention vise à proposer une conception améliorée d'un aménagement, notamment à l'intérieur d'un véhicule de loisirs, faisant appel à un escalier qui, notamment, ne nécessite pas de coopérer avec une barre ou un bord de seuil.

Dans le cadre de l'aménagement de logements ou analogues, pour accéder à une partie haute aménagée en mezzanine, il est connu d'utiliser un escalier pliable et rabattable qui est fixé le long d'un mur latéral.

Comme on peut le voir par exemple dans les documents FR3004202A1 ou DE682831, dans l'état plié et rabattu d'un tel escalier, les marches sont rabattues dans un plan vertical le long de la face intérieure du mur latéral.

Des exemples d'aménagement sont aussi décrits dans les documents US2020/300038A1 et DE102009032515A1.

L'invention vise à proposer un nouvel aménagement faisant appel à un escalier à plusieurs marches offrant des solutions avantageuses d'agencement et d'utilisation.

### Résumé de l'invention

L'invention propose un véhicule de loisirs comportant un aménagement d'une zone intérieure habitable qui est délimitée par une paroi latérale d'orientation verticale et longitudinale et qui comporte :
- une partie basse délimitée par un plancher ;
- et une partie haute, telle qu'un espace de couchage, qui est délimitée par un bord transversal avant de seuil qui permet d'accéder à la partie haute,
et qui est équipé d'un escalier mobile à plusieurs marches qui est mobile pour occuper :
-- une position avant d'utilisation permettant d'accéder à la partie haute en franchissant ledit bord avant de seuil et dans laquelle l'escalier mobile est au moins en partie en appui sur le plancher de la partie basse ;
-- ou une position arrière rangée de l'escalier mobile dans laquelle il est logé au moins en partie en-dessous de la partie haute,
caractérisé en ce que :
- l'escalier mobile comporte un montant latéral, d'orientation verticale, qui est monté mobile entre :
   * une position avant d'utilisation associée à la position avant d'utilisation de l'escalier mobile;
   * et une position arrière rangée associée à la position arrière rangée de l'escalier (40) mobile ;
- en ce que l'escalier mobile est pliable et rabattable dans un plan vertical comportant :
   -- deux limons parallèles dont un limon fixe constitué par le montant latéral, et un limon mobile ;
   -- et des marches montées articulées sur les deux limons autour d'axes parallèles aux petits côtés des marches pour permettre à l'escalier mobile d'occuper :
      i) soit un état d'utilisation dans lequel le limon mobile est en appui sur le plancher;
      ii) soit un état plié et rabattu dans lequel le limon mobile et les marches sont rabattues dans un plan vertical le long de la face intérieure du montant latéral,
         et en ce que, dans l'état plié et rabattu et en position avant d'utilisation de l'escalier mobile, l'aménagement intérieur donne accès à au moins une zone latérale fonctionnelle agencée dans ladite une paroi latérale.

Selon d'autres caractéristiques d'un tel véhicule de loisirs :
- dans l'état plié et rabattu et en position avant de l'escalier mobile, l'aménagement intérieur donne accès à au moins une autre zone latérale fonctionnelle agencée dans une autre paroi latérale d'orientation verticale et longitudinale, et/ou dans une paroi arrière, d'orientation verticale et transversale ;
- l'escalier mobile est monté mobile en translation horizontalement selon une direction longitudinale orthogonale à la direction transversale, ou est monté mobile en pivotement autour d'un axe vertical, pour occuper sa position avant d'utilisation ou sa position arrière rangée ;
- la partie haute comporte un élément plan de couchage, notamment un élément de sommier, qui est délimité par un bord transversal avant et qui est monté pivotant autour d'un axe transversal horizontal arrière entre une position basse horizontale de couchage, et une position haute verticale de rangement ;
- dans son état d'utilisation et en position arrière rangée, l'escalier mobile peut être logé entièrement en dessous de la partie haute ;
- dans son état plié et rabattu et en position arrière rangée, l'escalier mobile peut être logé entièrement en dessous de la partie haute ;
- le véhicule de loisir comporte des moyens de verrouillage de l'escalier mobile en position avant d'utilisation et/ou en position arrière rangée ;
- le montant latéral est réalisé sous la forme d'une plaque, d'orientation verticale ;
- l'escalier mobile est monté mobile en translation horizontalement selon une direction longitudinale orthogonale à la direction transversale, et le montant latéral de l'escalier mobile est guidé en coulissement longitudinal le long d'une face intérieure de ladite une paroi latérale ;
- la partie haute comporte un sommier avant mobile qui est délimité par un bord transversal avant et qui est monté pivotant autour d'un axe transversal horizontal arrière entre une position basse horizontale de couchage et une position haute verticale de rangement, et en la partie située en-dessous de la partie haute de couchage comporte deux parois latérales parallèles fixes délimitant un espace, ou volume, qui est aussi délimité par le plancher et par le sommier avant mobile lorsque celui-ci est en position basse de couchage ;
- lorsque l'escalier mobile est entièrement replié et rabattu verticalement le long dudit montant latéral et le sommier avant mobile est en position haute verticale de rangement, un utilisateur peut se tenir debout dans ledit espace ou volume ;
- l'escalier mobile est monté mobile en pivotement autour d'un axe vertical, pour occuper sa position avant d'utilisation ou sa position arrière rangée, ces deux positions étant décalées angulairement l'une par rapport à l'autre, ledit axe de pivotement étant situé sensiblement au droit dudit bord transversal avant de seuil.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue schématique partielle en perspective de trois-quarts avant droit de la partie arrière principale habitable d'un véhicule de loisirs aménagé selon l'invention, sur laquelle l'escalier mobile est représenté dans son état déployé et en position longitudinale avant d'utilisation, et sur laquelle la partie avant du sommier du lit supérieur transversal arrière est en position basse horizontale de couchage ;
[Fig.2] - la figure 2 est une vue de dessus des éléments illustrés à la figure 1 ;

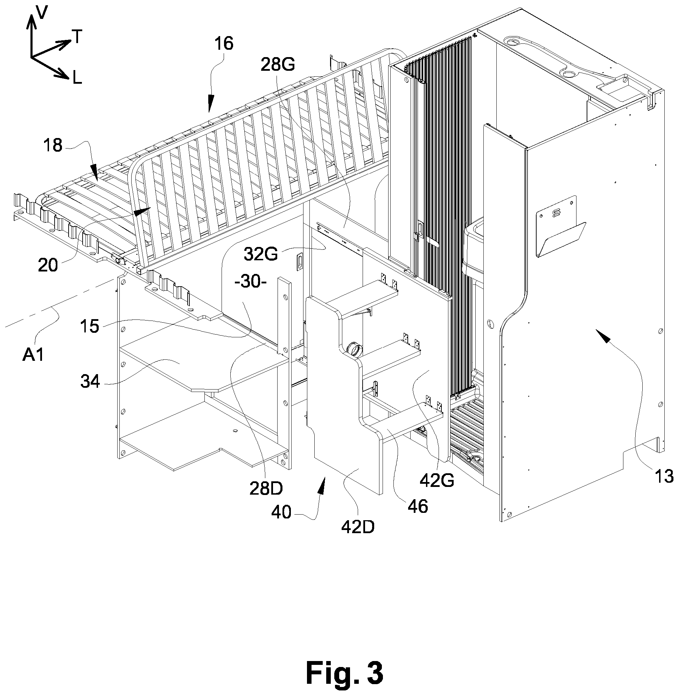

[Fig.3] - la figure 3 est une vue analogue à celle de la figure 1 sur laquelle la partie avant du sommier du lit supérieur transversal arrière est en position haute verticale de rangement ;

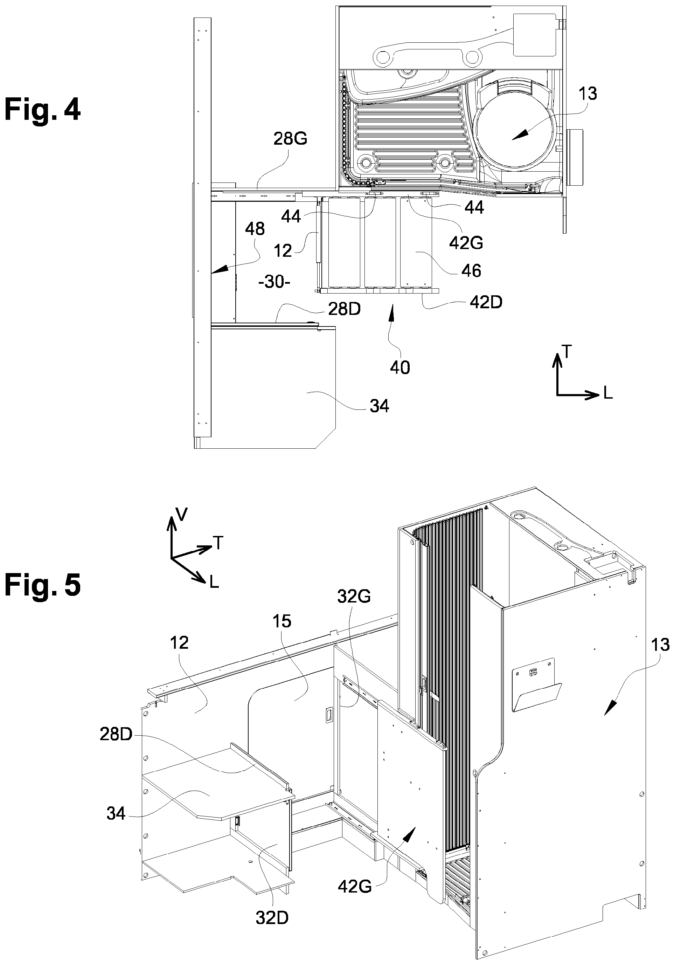

[Fig.4] - la figure 4 est une vue analogue à celle de la figure 2 sans l'escalier mobile ni les éléments de sommier arrière et avant appartenant au lit supérieur transversal arrière ;
[Fig.5] - la figure 5 est une vue analogue à celle de la figure 3, sans l'escalier mobile ni les éléments de sommier arrière et avant appartenant au lit supérieur transversal arrière ;
[Fig.6] - la figure 6 est une vue schématique de détail en perspective de trois-quarts arrière droit illustrant l'escalier mobile représenté aux figures 3 et 4 ;
[Fig.7] - la figure 7 est une vue schématique de face, partiellement en perspective, illustrant la partie arrière selon l'invention sur laquelle l'escalier mobile est représenté dans son état déployé et en position longitudinale avant d'utilisation, et sur laquelle la partie avant du sommier du lit supérieur transversal arrière est en position basse horizontale de couchage ;
[Fig.8] - la figure 8 est une vue analogue à celle de la figure 7 sur laquelle l'escalier mobile est représenté dans son état déployé et en position longitudinale arrière rangée sous le lit supérieur transversal arrière ;
[Fig.9] - la figure 9 est une vue analogue à celle de la figure 8 sur laquelle la partie avant du sommier du lit supérieur transversal arrière est en position haute verticale de rangement, et sur laquelle l'escalier mobile est en position arrière rangée et en cours de pliage et de rabattement dans un plan vertical le long de la face intérieure de son montant latéral ;
[Fig.10] - la figure 10 est une vue analogue à celle de la figure 9 sur laquelle l'escalier mobile est en position longitudinale arrière rangée et dans son état plié et rabattu dans un plan vertical le long de la face intérieure de son montant latéral ; et
[Fig.11] - la figure 11 est une vue analogue à celle de la figure 10 sur laquelle l'escalier mobile est en position longitudinale avant et dans son état plié et rabattu dans un plan vertical le long de la face intérieure de son montant latéral.

### Description détaillée de l'invention

Pour la description de l'invention et la compréhension des revendications, on adoptera à titre non limitatif les orientations verticale, longitudinale et transversale selon le repère V, L, T indiqué aux figures dont les axes longitudinal L et transversal T s'étendent dans un plan horizontal.

Les termes « longitudinal », « transversal », « vertical » et « horizontal » font ici respectivement référence aux orientations longitudinale L, transversale T et verticale V d'un véhicule de loisirs, et l'axe transversal est orienté de la droite vers la gauche en considérant le sens de roulage en marche avant du véhicule.

Par convention, l'axe longitudinal L est orienté de l'arrière vers l'avant.

Dans la description qui va suivre, des éléments identiques, similaires ou analogues seront désignés par les mêmes chiffres de référence.

Le véhicule de loisirs est par exemple un camping-car. En variante, le véhicule de loisirs peut par exemple être un van ou une caravane.

La partie avant du véhicule - non représentée - constitue notamment le poste de conduite avec deux sièges avant gauche et droit, et la partie arrière du véhicule partiellement représentée aux figures est son compartiment intérieur habitable.

Cette partie ou zone arrière habitable 10 est délimitée notamment des parois verticales transversale arrière, latérale droite et latérale gauche. Elle est aussi délimitée par un plancher et par une paroi supérieure horizontale.

La zone arrière intérieure habitable reçoit des composants et divers équipements permettant de vivre à l'intérieur du véhicule, parmi lesquels certains sont représentés aux figures.

Le long ou à proximité d'une cloison transversale arrière 12, on a représenté à titre non limitatif des éléments ou zones de rangement, un bloc sanitaire 13, et un lit arrière transversal supérieur 16.

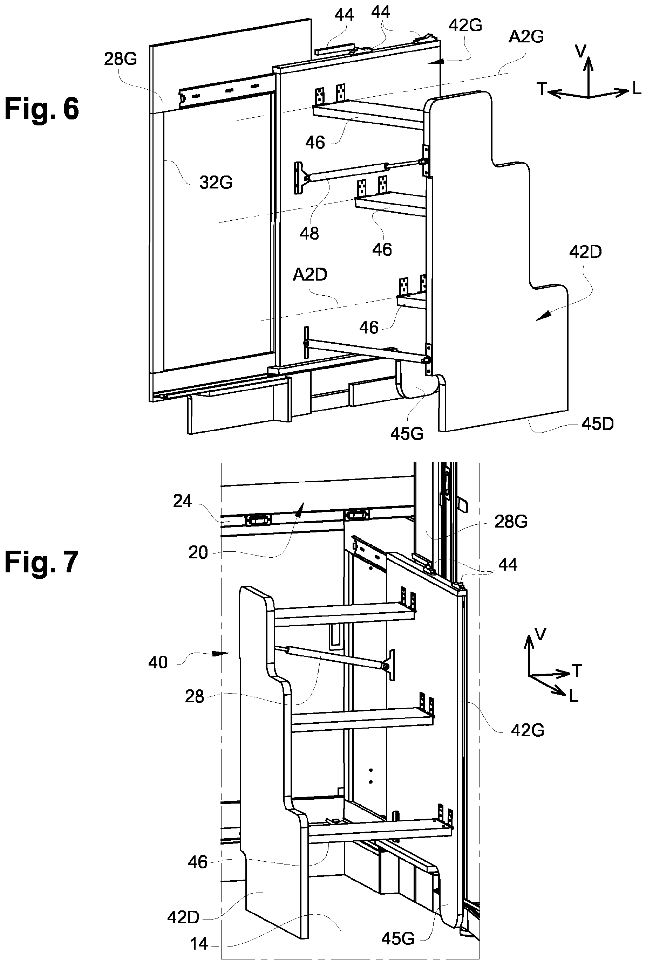

Plus précisément, on distingue la cloison transversale arrière 12 qui s'étend verticalement vers le haut depuis le plancher 14 (Voir figure 7) sur une partie de la hauteur totale disponible et qui est surmontée par le lit transversal arrière 16 qui s'étend ici horizontalement sur toute la largeur transversale de la zone arrière habitable.

Le lit supérieur 16 comporte un sommier arrière fixe 18 qui s'étend longitudinalement vers l'arrière au-delà de la cloison transversale arrière 12, ici au-dessus d'une soute arrière à bagages ou à vélos à l'intérieur de laquelle il est possible d'accéder depuis l'extérieur du véhicule, et aussi par exemple grâce à une trappe ou porte 15 aménagée à cet effet dans la cloison transversale arrière 12 au niveau du plancher 14.

Le lit supérieur 16 comporte aussi un sommier avant 20, délimité par un bord transversal arrière 22 et par un bord transversal avant 24, qui s'étend longitudinalement vers l'avant et qui est mobile en étant monté pivotant autour d'un axe transversale A1 situé au droit de son bord transversal arrière 22 et au droit de la cloison transversal arrière 12.

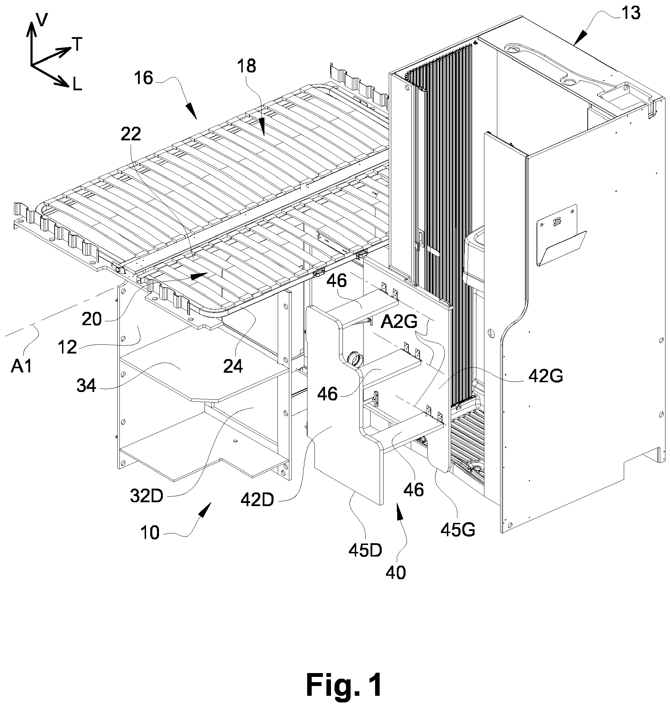

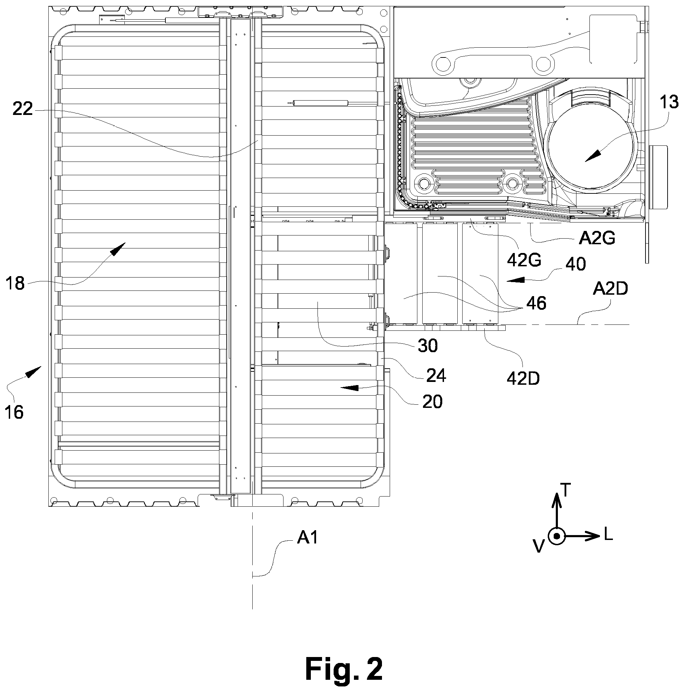

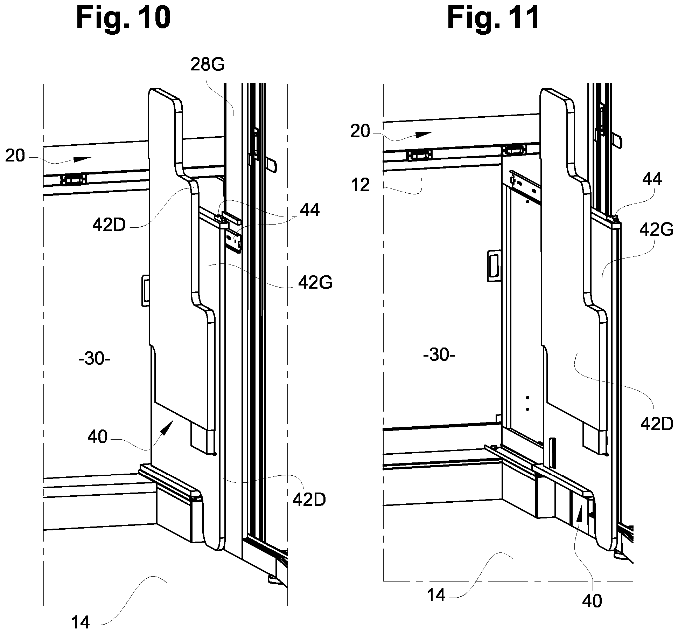

Ainsi, le sommier avant 20 est monté pivotant entre sa position basse horizontale de couchage (Voir figures 1 et 2) dans laquelle il s'étend horizontalement dans le prolongement du sommier arrière fixe 18 pour constituer un plan de couchage, et une position haute verticale de rangement (Voir figures 11 et 12) dans laquelle il s'étend sensiblement verticalement vers le haut, au-dessus de la cloison transversale arrière.

Le lit supérieur 16 délimite ainsi un espace de couchage, qui est délimité longitudinalement vers l'avant par le bord transversal avant 24 qui constitue un bord de seuil permettant d'accéder à la partie haute de la zone intérieure habitable.

En-dessous du sommier avant mobile 20, la partie située en-dessous de la partie haute de couchage comporte ici deux parois latérales parallèles fixes, d'orientation verticale et longitudinale, dont une paroi latérale de gauche 28G et une paroi latérale de droite 28D.

Avec la portion associée de la paroi transversale arrière 12, ces deux parois latérales 28G et 28D délimitent un espace, ou volume, 30 qui est aussi délimité par le plancher 14 et par le sommier avant mobile 20 lorsque celui-ci est en position basse de couchage.

A titre d'exemple non limitatif, la paroi latérale gauche 28G comporte une découpe rectangulaire 32G donnant accès à une zone fonctionnelle utile qui peut par exemple être une zone de rangement.

De même, la paroi latérale droite 28D comporte une porte 32D donnant accès à une zone fonctionnelle utile qui peut par exemple être une zone de rangement, de même que à la zone située au-dessus de l'étagère 34 qui s'étend dans le prolongement du bord supérieur de la paroi latérale droite 28G.

Conformément aux enseignements de l'invention, l'espace 30 est apte à loger, ici entièrement, un escalier 40 à plusieurs marches 46 qui est mobile horizontalement selon la direction transversale T de façon à pouvoir occuper sa position avant d'utilisation, illustrée notamment aux figures 1, 2, et 7, permettant d'accéder à la partie haute et à la zone de couchage en franchissant le bord transversal avant de seuil 24 du sommier avant mobile 20 et dans laquelle l'escalier mobile est au moins en partie en appui sur le plancher 14 de la partie basse.

Dans l'exemple d'aménagement illustré aux figures, dans cette position avant d'utilisation, l'escalier mobile 40 est positionné longitudinalement au droit du bloc sanitaire 13 et devant l'espace 30 auquel il n'est pas possible d'accéder.

L'escalier mobile 40 peut aussi occuper sa position arrière dans laquelle il est ici entièrement logé dans l'espace 30 en-dessous de la partie haute comportant la zone de couchage.

A cet effet, l'escalier mobile 40 comporte un montant latéral gauche 42G en forme d'une plaque rectangulaire qui s'étend dans un plan vertical d'orientation longitudinale.

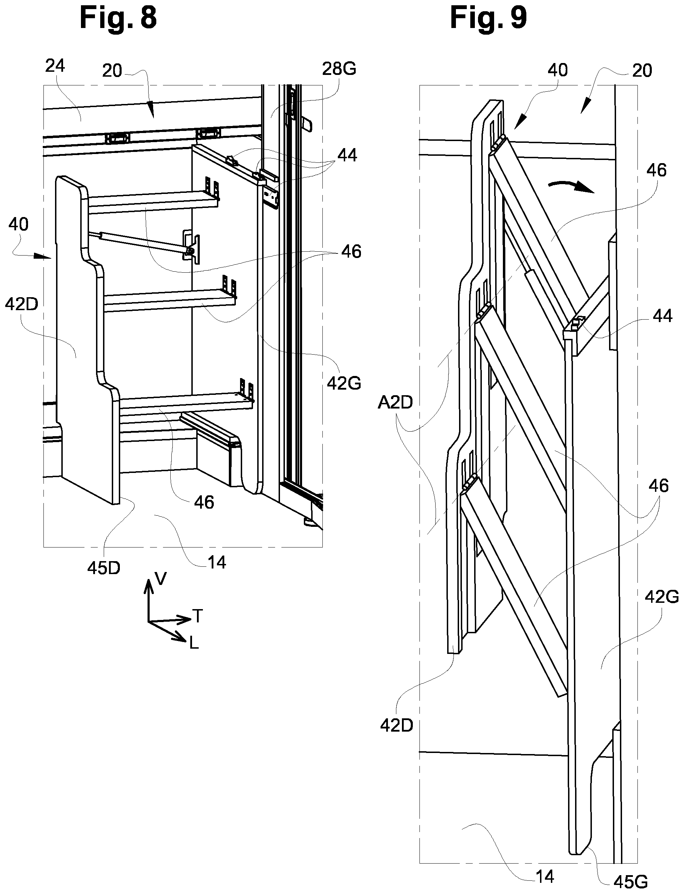

Le montant latéral gauche 42G est ici monté sur la paroi latérale gauche fixe 28G par des moyens de guidage en coulissement permettant des déplacements longitudinaux en translation dans les deux sens du montant latéral gauche 42G entre deux positions longitudinales extrêmes avant (Figures 1 et 2) et arrière (Figures 8 et 10) correspondant aux deux positions longitudinales fonctionnelles avant et arrière de l'escalier mobile 40 mentionnées plus haut.

Différents moyens 44 de verrouillage du montant latéral gauche 42G dans l'une et l'autre de ses deux positions extrêmes sont prévus et représentés aux figures.

Pour répartir les efforts lorsqu'un utilisateur monte sur les marches de l'escalier, le montant latéral gauche 42G comporte un pied inférieur avant 45G qui est apte à prendre appui sur le plancher 14.

L'escalier mobile 40 est un escalier pliable et rabattable dans un plan vertical constitué par :
- le montant latéral gauche 42G qui est monté mobile horizontalement et qui constitue un limon fixe au sens de l'invention ;
- le montant latéral droit 42D qui constitue un limon mobile de l'escalier 40 pliable et rabattable ;
- et des marches 46, ici au nombre de trois, dont chacune - à ses deux extrémités transversales opposées - est montée articulée sur les deux limons 42G et 42D autour d'axes horizontaux A2G, A2D qui sont parallèles aux petits côtés des marches 46.

Cette conception permet à l'escalier pliable et rabattable verticalement d'occuper son état d'utilisation représenté aux figures 1, 2, et 7) dans lequel le limon mobile 42D est en appui sur le plancher 14 par son bord horizontal inférieur 45D.

Cette conception permet aussi de replier l'escalier mobile 40 dans son état plié et rabattu dans lequel le limon mobile 42D et les marches 46 sont rabattues dans un plan vertical le long de la face intérieure 43G du montant latéral gauche 42G (Voir figures 10 et 11).

Afin de faciliter la manipulation de l'escalier pliable et rabattable 40 entre ses deux états déployé d'utilisation et son état plié et rabattu, on prévoit par exemple un amortisseur 48. Comme représenté à la figure 7, un utilisateur peut monter dans le lit supérieur 16 dont le sommier avant 20 est en position horizontale de couchage en utilisant l'escalier mobile 40 qui est verrouillé en position longitudinale avant d'utilisation, à l'extérieur de l'espace 30.

En partant de la position représentée à la figure 7, en repoussant l'escalier mobile 40 longitudinalement vers l'arrière, on peut atteindre la position représentée à la figure 8 dans laquelle l'escalier mobile 40 est entièrement rangé dans l'espace 30 et sous le sommier avant 20, position dans laquelle il est à nouveau verrouillé.

Dans cette position, il est possible de relever verticalement le sommier avant mobile 20et, comme on le voit à la figure 9.

Il est aussi possible de commencer à replier l'escalier mobile 40 en vue de le rabattre verticalement en agissant sur le montant latéral 42D faisant fonction de limon mobile.

On atteint alors l'état et la position représentée à la figure 10 dans laquelle l'escalier mobile 40 est entièrement replié et rabattu verticalement le long du montant latéral gauche 42G en dégageant ainsi l'espace ou volume 30 dans lequel un utilisateur peut se tenir debout en accédant notamment aux portes et trappes dont l'accès est dégagé.

Pour accéder à l'ouverture 32G et à la zone associée, il est possible de déplacer l'escalier 40 - dans son état replié et rabattu - longitudinalement vers l'avant comme illustré à la figure 11.

L'invention qui vient d'être décrite n'est pas limitée à son utilisation à l'intérieur d'un véhicule de loisirs.

Selon une variante non représentée, l'escalier 40 est monté mobile en pivotement autour d'un axe vertical, pour occuper sa position avant d'utilisation ou sa position arrière rangée, ces deux positions étant par exemple décalées angulairement l'une par rapport à l'autre de quatre-vingt-dix degrés d'angle, l'axe de pivotement étant par exemple situé sensiblement au droit du bord transversal avant 24 du sommier avant 20.

Selon une variante non représentée, l'aménagement selon l'invention peut être utilisée dans un logement, par exemple dans une chambre, pour accéder à un lit aménagé en mezzanine. A cet effet, l'escalier mobile et rabattable est par exemple agencé à une extrémité longitudinale du lit et le montant latéral fixe, par exemple de gauche, est monté coulissant le long d'une cloison ou d'un mur ou d'un montant support de la mezzanine en offrant les mêmes possibilités et avantages de rangement que ceux mentionnés précédemment.

## Revendications

1. Véhicule de loisirs comportant un aménagement d'une zone intérieure habitable qui est délimitée par une paroi latérale (28G) d'orientation verticale et longitudinale et qui comporte :
- une partie basse délimitée par un plancher (14) ;
- et une partie haute, telle qu'un espace de couchage, qui est délimitée par un bord transversal avant de seuil (24) qui permet d'accéder à la partie haute,
et qui est équipé d'un escalier (40) mobile à plusieurs marches (46) qui est mobile pour occuper :
-- une position avant d'utilisation permettant d'accéder à la partie haute en franchissant ledit bord avant de seuil (24) et dans laquelle l'escalier (40) mobile est au moins en partie en appui sur le plancher (14) de la partie basse ;
-- ou une position arrière rangée de l'escalier (40) mobile dans laquelle il est logé au moins en partie en-dessous de la partie haute,
**caractérisé en ce que** :
- l'escalier (40) mobile comporte un montant latéral (42G), d'orientation verticale, qui est monté mobile entre :
* une position avant d'utilisation associée à la position avant d'utilisation de l'escalier (40) mobile ;
* et une position arrière rangée associée à la position arrière rangée de l'escalier (40) mobile ;
- **en ce que** l'escalier mobile (40) est pliable et rabattable dans un plan vertical comportant :
-- deux limons parallèles (42G, 42D) dont un limon fixe (42G) constitué par le montant latéral (42G), et un limon mobile (42D) ;
-- et des marches (46) montées articulées sur les deux limons (42G, 42D) autour d'axes (A2G, A2D) parallèles aux petits côtés des marches (46) pour permettre à l'escalier (40) mobile d'occuper :
i) soit un état d'utilisation dans lequel le limon mobile (42G) est en appui sur le plancher (14) ;
ii) soit un état plié et rabattu dans lequel le limon mobile (42D) et les marches (46) sont rabattues dans un plan vertical le long de la face intérieure (43G) du montant latéral (42G),
et **en ce que**, dans l'état plié et rabattu et en position avant d'utilisation de l'escalier mobile (40), l'aménagement intérieur donne accès à au moins une zone latérale fonctionnelle (32G) agencée dans ladite une paroi latérale (28G).

2. Véhicule de loisirs selon la revendication 1, **caractérisé en ce que**, dans l'état plié et rabattu et en position avant de l'escalier mobile (40), l'aménagement intérieur donne accès à au moins une autre zone latérale fonctionnelle (32G, 15) agencée dans une autre paroi latérale (28D) d'orientation verticale et longitudinale, et/ou dans une paroi arrière (12), d'orientation verticale et transversale.

3. Véhicule de loisirs selon la revendication 1 ou 2, **caractérisé en ce que** l'escalier mobile (40) est monté mobile en translation horizontalement selon une direction longitudinale orthogonale à la direction transversale, ou est monté mobile en pivotement autour d'un axe vertical, pour occuper sa position avant d'utilisation ou sa position arrière rangée.

4. Véhicule de loisirs selon l'une quelconque des revendications 1 à 3, **caractérisé en ce que** la partie haute comporte un élément plan de couchage, notamment un élément de sommier, qui est délimité par un bord transversal avant (24) et qui est monté pivotant autour d'un axe transversal horizontal arrière (A1) entre une position basse horizontale de couchage, et une position haute verticale de rangement.

5. Véhicule de loisirs selon l'une quelconque des revendications précédentes, **caractérisé en ce que** dans son état d'utilisation et en position arrière rangée, l'escalier mobile (40) peut être logé entièrement en-dessous de la partie haute.

6. Véhicule de loisirs selon l'une quelconque des revendications 1 à 4, **caractérisé en ce que** dans son état plié et rabattu et en position arrière rangée, l'escalier mobile (40) peut être logé entièrement en-dessous de la partie haute.

7. Véhicule de loisirs selon l'une quelconque des revendications précédentes, **caractérisé en ce qu'**il comporte des moyens (44) de verrouillage de l'escalier mobile (40) en position avant d'utilisation et/ou en position arrière rangée.

8. Véhicule de loisirs selon l'une quelconque des revendication précédentes, **caractérisé en ce que** le montant latéral (42G) est réalisé sous la forme d'une plaque, d'orientation verticale.

9. Véhicule de loisirs selon la revendication 3, **caractérisé en ce que** l'escalier mobile (40) est monté mobile en translation horizontalement selon une direction longitudinale orthogonale à la direction transversale, et **en ce que** le montant latéral de l'escalier mobile (40) est guidé en coulissement longitudinal le long d'une face intérieure de ladite une paroi latérale (28G).

10. Véhicule de loisirs selon la revendication 4, **caractérisé en ce que** la partie haute comporte un sommier avant mobile (20) qui est délimité par un bord transversal avant (24) et qui est monté pivotant autour d'un axe transversal horizontal arrière (A1) entre une position basse horizontale de couchage et une position haute verticale de rangement, et **en ce que** la partie située en-dessous de la partie haute de couchage comporte deux parois latérales parallèles fixes (28G, 28D) délimitant un espace, ou volume, (30) qui est aussi délimité par le plancher (14) et par le sommier avant mobile (20) lorsque celui-ci est en position basse de couchage.

11. Véhicule selon la revendication précédente, **caractérisé en ce que**, lorsque l'escalier mobile (40) est entièrement replié et rabattu verticalement le long dudit montant latéral (42G) et le sommier avant (20) mobile est en position haute verticale de rangement, un utilisateur peut se tenir debout dans ledit espace ou volume (30).

12. Véhicule de loisirs selon la revendication 3, **caractérisé en ce que** l'escalier mobile (40) est monté mobile en pivotement autour d'un axe vertical, pour occuper sa position avant d'utilisation ou sa position arrière rangée, ces deux positions étant décalées angulairement l'une par rapport à l'autre, ledit axe de pivotement étant situé sensiblement au droit dudit bord transversal avant de seuil (24).
